# EUROPEAN PATENT SPECIFICATION

(11) **EP 1 024 973 B1**
(45) Date of publication and mention of the grant of the patent: **28.12.2005**
(21) Application number: 98951098.7
(22) Date of filing: 15.10.1998
(51) Int. Cl.: B60J 3/02, B60J 3/04

(54) **GLARE REDUCING VISOR**
SONNENBLENDE FÜR BLENDUNGSVERMINDERUNG
PARE-SOLEIL REDUCTEUR D'EBLOUISSEMENT

(30) Priority: 15.10.1997 AU 4102797
(43) Date of publication of application: 09.08.2000
(73) Proprietor: Sun Zapper (Aust) Pty Limited, Sydney, NSW 2000 (AU)
(72) Inventor: Cummins, Pamela Robin, Port Macquarie, NSW 2444 (AU)
(74) Representative: Gibson, Stewart Harry
(86) International application number: PCT/AU1998/000860
(87) International publication number: WO 1999/019159

(56) References cited:
- AU-A- 3 224 984
- DE-A1- 4 333 840
- FR-A- 2 740 082
- FR-A1- 2 758 499
- GB-A- 2 321 629
- US-A- 4 053 180
- US-A- 4 090 732
- US-A- 4 989 910

## Description

### BACKGROUND OF THE INVENTION

The invention relates to an improved glare reducing visor assembly for a vehicle, according to the preamble of claim 10, and to the corresponding sun visor, according to the preamble of claim 1. A glare reducing visor of this type is disclosed in US4020732.

### DESCRIPTION OF THE PRIOR ART

Known sun visors comprise an upholstered visor pivotably mounted on an L-shaped support arm attached to the vehicle interior ceiling and able to be pivoted down from a horizontal position against the ceiling to a functional, downwards position which obscures the upper part of the vehicle windscreen. The support arm is usually pivotably mounted to its support plate to allow the visor to be swung around parallel to the vehicle side window.

The existing sun visors are an important vehicle safety accessory and function well in most conditions to keep the sun's glare out of the driver's eyes. However, there are circumstances where the existing visors do not achieve their aims, especially where the sun is low in the sky or the driver is short in stature.

The use of tinted panels extending below and/or to the side of an opaque visor has been suggested in patent literature, for example US Patent No. 4 989 910 (Mersman et al), US Patent No. 4 828 314 (Gavagan), and US Patent No. 4090732 (Vistitsky). In particular, US Patent No. 4090732 discloses a vehicle sun visor comprising a conventional opaque panel adapted to be positioned in front of a windshield of a vehicle and a sun visor extension including a first semi-transparent tinted panel and a second semi-transparent panel. The panels can be pivoted and slid on the opaque panel to a lower position relative to the vehicle windshield. To this end the opaque panel is provided with a pair of tracks, each of which slidably mounts a bearing having a pair of laterally extending pintles. The pintles rotatably mount a pair of brackets fixed to the first and second panels respectively. The first panel is used to reduce the glare from sun's rays by positioning it at an appropriate angle by rotating its bracket. At night, when it is desired to reduce the glare of headlights of incoming vehicles, the panels may be used in combination to polarize and reduce the glare of the incoming headlights. To this end the panels are polarized with respect to each other.

While the above -described patent discloses a sun visor extension which is both pivotable and slidable relative to the windshield, the overlapped combination of the panels is not adjustable.

Therefore, the present inventor identifies a need for a glare reducing sun visor arrangement of improved performance.

### SUMMARY OF THE INVENTION

The present invention thus provides a sun visor for a motor vehicle having a windscreen with an upper part, comprising:
(a) an opaque visor member which obscures a first visual region corresponding to the upper part of the windscreen,
(b) a first substantially transparent panel having a length and extendible from the visor member to create a second visual region below the first visual region, said second visual region having a first glare reduction relative to the windscreen, and
(c) a second substantially transparent panel movable in relation to the first panel, characterised in that the second panel is adjustably movable substantially along and over said length of said first panel so that the first and the second panels cooperate to form a subregion of the second visual region, said subregion having an increased glare reduction relative to the first glare reduction.

The present invention also provides a glare reducing visor for deployment in combination with an opaque visor member of a sun visor, said opaque visor member obscuring a first visual region corresponding to an upper part of a windscreen, the glare reducing visor including
(a) a first substantially transparent panel having a length and including means to be mounted extendible from the visor member to create a second visual region below the first visual region, said second visual region having a first glare reduction relative to the windscreen, and
(b) a second substantially transparent panel movable in relation to the first panel,
characterised in that the second panel is adjustably movable substantially along and over said length of said first panel so that the first and the second panels cooperate to form a subregion of the second visual region, said subregion having an increased glare reduction relative to the first glare reduction.

Preferably said second glare reducing panel is sized such that said subregion extends substantially along an entire height of said second visual region.

Preferably said first glare reducing panel is movable into a retracted position substantially parallel and adjacent to said visor member.

Preferably said first glare reducing panel in said retracted position is positioned inside said visor member.

Preferably said first glare reducing panel is slidable from said retracted position into said extended position.

Preferably said first glare reducing panel includes a handle which extends outside said visor member when said first glare reducing panel is in said retracted position.

Preferably said visor member includes an opening and said first glare reducing panel is retractable into said visor member through said opening.

Preferably said visor member resiliently engages said first glare reducing panel about said opening.

Preferably said visor member resiliently closes about said opening to retain said first glare reducing panel in said retracted position.

### BRIEF DESCRIPTION OF THE DRAWINGS

Further preferred embodiments will now be described with reference to the accompanying drawings, in which:
Fig. 1 is a rear elevation of a preferred sun visor construction with the glare reducing panel retracted;
Fig. 2 is an inverse plan view of Fig. 1;
Fig. 3 is a rear elevation of the sun visor of Fig. 1, with the glare reducing panel extended;
Fig. 4 is an inverse plan view of Fig. 3; and
Fig. 5 and 6 are rear elevations of an alternative embodiment in retracted and extended positions respectively.

### DETAILED DESCRIPTION OF THE PREFERRED EMBODIMENTS

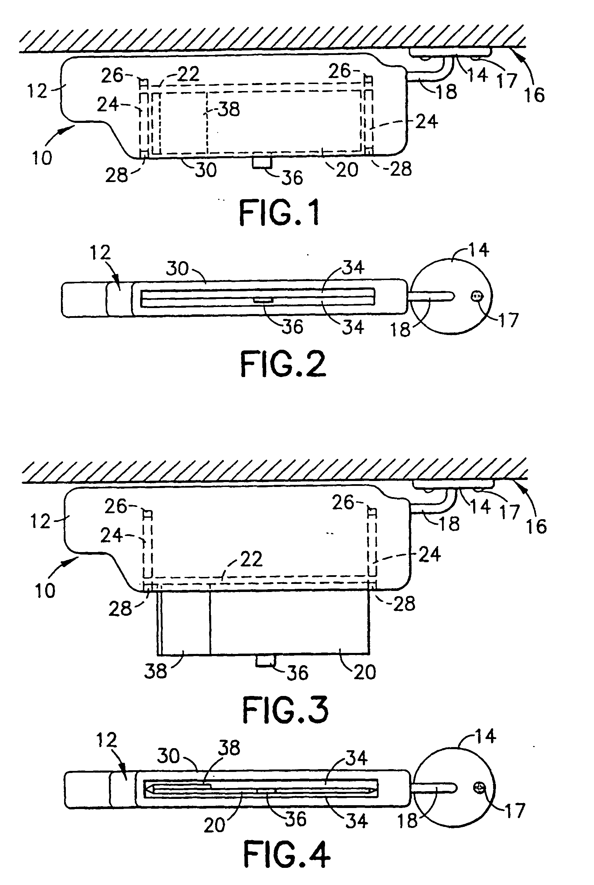

With reference to Figs. 1 and 2, the sun visor 10 has an opaque visor member 12 which may be constructed generally as a frame (not shown) covered with upholstery matching the vehicle's interior, as well known in the art. The sun visor support arrangement, consisting of a support plate 14 secured to the vehicle ceiling 16 by screws 17, and a pivotable, L-shaped support arm 18 will also be well understood by the skilled addressee.

The sun visor of Figs. 1 to 4 departs from the standard prior art opaque visor arrangement by inclusion of a substantially transparent, first glare reducing panel 20 movable from its retracted position (shown in ghost in Fig. 1) inside the visor member 12 to the extended position shown in Figs. 3 and 4.

The first panel 20 is supported along its upper edge by a support rail 22 capable of vertical movement within guide tracks 24 fixed to the internal frame of the sun visor. The upper and lower limits of movement are defined respectively by upper stops 26 and lower stops 28 in the guide tracks.

The first panel 20 is substantially transparent, in the sense that it allows substantially undistorted visibility therethrough, but has glare reducing properties. Preferably the panel is tinted, although alternatively or additionally the panel may be polarised and may additionally have ultraviolet filtering properties.

The first panel 20 is preferably formed of plastics sheet material of sufficient thickness and rigidity to maintain its shape during normal use, but display a degree of flexibility under impact conditions in case of collision. The optical properties of the panel may be imparted integrally into the plastics material or applied by means of a film.

As seen from Fig. 2, the bottom edge 30 of the opaque visor member 12 has an elongate opening of length slightly greater than first panel 20. The opening is surrounded by lips 34 of opening of length slightly greater than panel 20. The opening is surrounded by lips 34 of rubber or similar material which are resiliently closed when the first panel 20 is in the retracted position, such that only a small handle 36 on the bottom of first panel 20 protrudes below the bottom edge 30 of the visor member. The handle 36 is sufficiently small to not be a conspicuous impediment to the driver's vision but large enough to be gripped for withdrawal of the first panel 20 from the visor member.

The resilient lips 34 assist in retaining the first panel 20 in its retracted position.

Also apparent from Fig. 1 is a smaller, second glare reducing panel in the form of a second tinted panel 38 of similar material and construction to panel 20. This second panel is slidably mounted at its upper edge to the support rail 22, as will be discussed below with reference to Figs. 3 and 4.

Figs. 3 and 4 show first panel 20 in its extended position below the opaque visor member 12 and support rail 22 resting on the lower stops 28 of the guide tracks 24. With reference to Fig.4 it can be seen that the resilient lips 34 of the opening part just enough to allow the panel to pass through.

The first glare reducing panel 20 thus extends below the opaque visor member 12 to create a non-glare but transparent visual region below the opaque region.

The smaller tinted second panel 38 overlies a portion of the large panel to create a sub-region of intense glare reduction. The position of this region may be adjusted by sliding the smaller panel to the desired position aligning directly with the sun, and is retained in that position by the resilience of the lips. The small panel 38 preferably has darker tinting than the first panel 20. The small panel 38 may also have a handle or recessed portion (not shown) to assist movement without leaving fingerprints on the panel.

It will be appreciated that the invention may be embodied in other specific forms without departing from the scope hereof. For example, the first panel 20 and its support assembly may be mounted externally to the opaque visor member, for example by mounting the guide tracks 24 on the rear surface of the visor member. As this surface will be against the vehicle ceiling when the sun visor is not in use, this may result in an acceptable aesthetic appearance although not as neat as the illustrated embodiment. Also, the first panel may be mounted otherwise than by sliding, for example by hinging the bottom edge of first panel 20 onto the rear surface of the opaque visor member.

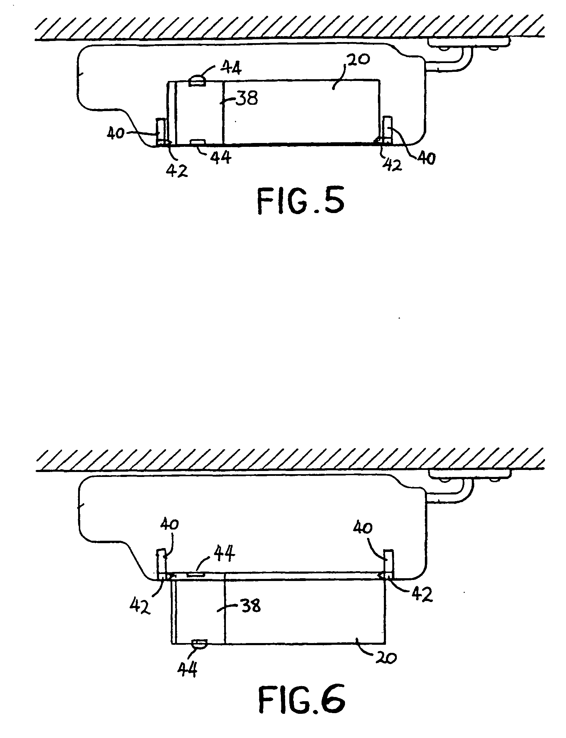

Figs. 5 and 6 illustrate an alternative embodiment adapted for after-market fitting to an existing opaque sun visor member 12. The glare reducing visor includes a pair of clips 40 fitting over the bottom edge of the opaque visor, having opposed pivot pins 42 received at the top corners (referring to the extended position) of the first glare reducing panel 20. The first panel 20 will thus pivot between its retracted position (Fig. 5) and extended position (Fig. 6). The second panel 38 may be attached for adjustable sliding movement along the length of the first panel 20 by means of double-channelled clips 44 which receive the edges of both panels 20, 38, and may also incorporate a tab for sliding the second panel.

While particular embodiments of this invention have been described, it will be evident to those skilled in the art that the present invention may be embodied in other specific forms without departing from the essential characteristics thereof. The present embodiments and examples are therefore to be considered in all respects as illustrative and not restrictive, the scope of the invention being indicated by the appended claims rather than the foregoing description, and all changes which come within the meaning and range of equivalency of the claims are therefore intended to be embraced therein.

## Claims

1. A sun visor for a motor vehicle having a windscreen with an upper part, comprising: an opaque visor member (12) which obscures a first visual region corresponding to the upper part of the windscreen, a first substantially transparent panel (20) having a length and extendible from the visor member (12) to create a second visual region below the first visual region, said second visual region having a first glare reduction relative to the windscreen, and a second substantially transparent panel (38) movable in relation to the first panel, **characterised in that** the second panel (38) is adjustably movable substantially along and over said length of said first panel (20) so that the first and the second panels (20, 38) cooperate to form a subregion of the second visual region, said subregion having an increased glare reduction relative to the first glare reduction.

2. The sun visor of claim 1, **characterised in that** the second glare reducing panel (38) is sized such that said subregion extends substantially along an entire height of said second visual region.

3. The sun visor of claim 1, **characterised in that** the first glare reducing panel (20) is movable into a retracted position substantially parallel and adjacent to said visor member (12).

4. The sun visor of claim 3, **characterised in that** the first glare reducing panel (20) in said retracted position is positioned inside said visor member (12).

5. The sun visor of claim 4, **characterised in that** the first glare reducing panel (20) is slidable from said retracted position into said extended position.

6. The sun visor of claim 5, **characterised in that** the first glare reducing panel (20) includes a handle (36) which extends outside the visor member (12) when said first glare reducing panel (20) is in said retracted position.

7. The sun visor of claim 5, **characterised in that** the visor member (12) includes an opening and the first glare reducing panel (20) is retractable into the visor member (12) through said opening.

8. The sun visor of claim 7, **characterised in that** the visor member (12) resiliently engages the first glare reducing panel (20) about said opening.

9. The sun visor of claim 8, **characterised in that** the visor member (12) resiliently closes about said opening to retain the first glare reducing panel (20) in said retracted position.

10. A glare reducing visor for deployment in combination with an opaque visor member (12) of a sun visor, said opaque visor member (12) obscuring a first visual region corresponding to an upper part of a windscreen, the glare reducing visor including
(a) a first substantially transparent panel (20) having a length and including means to be mounted extendible from the visor member (12) to create a second visual region below the first visual region, said second visual region having a first glare reduction relative to the windscreen, and
(b) a second substantially transparent panel (38) movable in relation to the first panel,
**characterised in that** the second panel (38) is adjustably movable substantially along and over said length of said first panel (20) so that the first and the second panels (20, 38) cooperate to form a subregion of the second visual region, said subregion having an increased glare reduction relative to the first glare reduction.

11. A glare reducing visor of claim 10, **characterised in that** the second glare reducing panel (38) is sized such that said subregion extends substantially along an entire height of said second visual region.

12. A glare reducing visor of claim 10, **characterised in that** the first glare reducing panel (20) is movable into a retracted position substantially parallel and adjacent to said visor member (12).

13. A glare reducing visor of claim 12, **characterised in that** the first glare reducing panel (20) in said retracted position is positioned inside said visor member (12).

14. A glare reducing visor of claim 13, **characterised in that** the first glare reducing panel (20) is slidable from said retracted position into said extended position.

15. A glare reducing visor of claim 14, **characterised in that** the first glare reducing panel (20) includes a handle (36) which extends outside the visor member (12) when said first glare reducing panel (20) is in said retracted position.

## Patentansprüche

1. Sonnenblende für ein Motorfahrzeug mit einer Windschutzscheibe mit einem oberen Bereich, umfassend:
ein opakes Blendenelement (12), das einen ersten, dem oberen Bereich der Windschutzscheibe entsprechenden Sichtbereich verdeckt,
eine erste, im Wesentlichen transparente Platte (20), die eine Länge besitzt und aus dem Blendenelement (12) ausstellbar ist, um einen zweiten Sichtbereich unterhalb des ersten Sichtbereichs zu erzeugen, wobei der zweite Sichtbereich eine erste Blendverminderung relativ zu der Windschutzscheibe aufweist,
und eine zweite, im Wesentlichen transparente, bezüglich der ersten Platte bewegliche Platte (38),
**dadurch gekennzeichnet, dass** die zweite Platte (38) im Wesentlichen entlang und über die Länge der ersten Platte (20) einstellbar beweglich ist, so dass die erste und die zweite Platte (20, 38) zusammenarbeiten, um einen Unterbereich des zweiten Sichtbereichs zu bilden, wobei der Unterbereich eine relativ zu der ersten Blendverminderung erhöhte Blendverminderung aufweist.

2. Sonnenblende nach Anspruch 1,
**dadurch gekennzeichnet, dass** die zweite Blendverminderungsplatte (38) eine derartige Größe aufweist, dass sich der Unterbereich im Wesentlichen über die gesamte Höhe des zweiten Sichtbereichs erstreckt.

3. Sonnenblende nach Anspruch 1,
**dadurch gekennzeichnet, dass** die erste Blendverminderungsplatte (20) in eine zurückgezogene Position bewegbar ist, die im Wesentlichen parallel und benachbart zu der des Blendenelements (12) ist.

4. Sonnenblende nach Anspruch 3,
**dadurch gekennzeichnet, dass** die erste Blendverminderungsplatte (20) in der zurückgezogenen Position innerhalb des Blendenelements (12) positioniert ist.

5. Sonnenblende nach Anspruch 4,
**dadurch gekennzeichnet, dass** die erste Blendverminderungsplatte (20) aus der zurückgezogenen Position in die ausgestellte Position gleiten kann.

6. Sonnenblende nach Anspruch 5,
**dadurch gekennzeichnet, dass** die erste Blendverminderungsplatte (20) einen Griff (36) aufweist, der sich außerhalb des Blendenelements (12) erstreckt, wenn sich die erste Blendverminderungsplatte (20) in der zurückgezogenen Position befindet.

7. Sonnenblende nach Anspruch 5,
**dadurch gekennzeichnet, dass** das Blendenelement (12) eine Öffnung aufweist und dass die erste Blendverminderungsplatte (20) durch die Öffnung in das Blendenelement (12) zurückziehbar ist.

8. Sonnenblende nach Anspruch 7,
**dadurch gekennzeichnet, dass** das Blendenelement (12) mit der ersten Blendverminderungsplatte (20) um die Öffnung herum elastisch in Eingriff steht.

9. Sonnenblende nach Anspruch 8,
**dadurch gekennzeichnet, dass** das Blendenelement (12) sich elastisch um die Öffnung schließt, um die erste Blendverminderungsplatte (20) in der zurückgezogenen Position zu halten.

10. Blendverminderungsblende zur Anwendung in Kombination mit einem opaken, einen ersten Sichtbereich entsprechend eines oberen Bereichs einer Windschutzscheibe verdeckenden Blendenelement (12) einer Sonnenblende, wobei die Blendverminderungsblende umfasst:
(a) eine erste, im Wesentlichen transparente Platte (20) mit einer Länge und umfassend Befestigungsmittel, derart dass die Platte (20) von dem Blendelement (12) ausstellbar ist, um einen zweiten Sichtbereichs unterhalb des ersten Sichtbereichs zu erzeugen, wobei der zweite Sichtbereich eine erste Blendverminderung relativ zu der Windschutzscheibe aufweist, und
(b) eine zweite, im Wesentlichen transparente, bezüglich der ersten Platte bewegliche Platte (38),
**dadurch gekennzeichnet, dass** die zweite Platte (38) im Wesentlichen entlang und über die Länge der ersten Platte (20) einstellbar beweglich ist, so dass die erste und die zweite Platte (20, 38) zusammenarbeiten, um einen Unterbereich des zweiten Sichtbereichs zu bilden, wobei der Unterbereich eine relativ zu der ersten Blendverminderung erhöhte Blendverminderung aufweist.

11. Blendverminderungsblende nach Anspruch 10,
**dadurch gekennzeichnet, dass** die zweite Blendverminderungsplatte (38) eine derartige Größe aufweist, dass sich der Unterbereich im Wesentlichen über die gesamten Höhe des zweiten Sichtbereichs erstreckt.

12. Blendverminderungsblende nach Anspruch 10,
**dadurch gekennzeichnet, dass** die erste Blendverminderungsplatte (20) in eine zurückgezogene Position bewegbar ist, die im Wesentlichen parallel und benachbart zu der des Blendenelements (12) ist.

13. Blendverminderungsblende nach Anspruch 12,
**dadurch gekennzeichnet, dass** die erste Blendverminderungsplatte (20) in der zurückgezogenen Position innerhalb des Blendenelements (12) positioniert ist.

14. Blendverminderungsblende nach Anspruch 13,
**dadurch gekennzeichnet, dass** die erste Blendverminderungsplatte (20) aus der zurückgezogenen Position in die ausgebrachte Position gleiten kann.

15. Blendverminderungsblende nach Anspruch 14,
**dadurch gekennzeichnet, dass** die erste Blendverminderungsplatte (20) einen Griff (36) aufweist, der sich außerhalb des Blendenelements (12) erstreckt, wenn sich die erste Blendverminderungsplatte (20) in der zurückgezogenen Position befindet.

## Revendications

1. Pare-soleil pour un véhicule à moteur ayant un pare-brise avec une partie supérieure, comprenant : un élément (12) de masque opaque qui obscurcit une première région visuelle correspondant à la partie supérieure du pare-brise, un premier panneau (20) sensiblement transparent ayant une longueur et pouvant s'étendre à partir de l'élément (12) de masque pour créer une seconde région visuelle en dessous de la première région visuelle, ladite seconde région visuelle ayant une première réduction d'éblouissement par rapport au pare-brise, et un second panneau (38) sensiblement transparent déplaçable par rapport au premier panneau, **caractérisé en ce que** le second panneau (38) est déplaçable de façon réglable, sensiblement le long et sur ladite longueur dudit premier panneau (20) de sorte que le premier et le second panneaux (20, 38) coopèrent pour former une sous-région de la seconde région visuelle, ladite sous-région ayant une réduction d'éblouissement augmentée par rapport à la première réduction d'éblouissement.

2. Pare-soleil selon la revendication 1, **caractérisé en ce que** le second panneau (38) de réduction d'éblouissement est dimensionné de façon telle que ladite sous-région s'étend sensiblement le long d'une hauteur complète de ladite seconde région visuelle.

3. Pare-soleil selon la revendication 1, **caractérisé en ce que** le premier panneau (20) de réduction d'éblouissement est déplaçable vers une position rétractée sensiblement parallèle et adjacente audit élément (12) de masque.

4. Pare-soleil selon la revendication 3, **caractérisé en ce que** le premier panneau (20) de réduction d'éblouissement est, dans ladite position rétractée, positionné à l'intérieur dudit élément (12) de masque.

5. Pare-soleil selon la revendication 4, **caractérisé en ce que** le premier panneau (20) de réduction d'éblouissement est coulissable à partir de ladite position rétractée vers ladite position étendue.

6. Pare-soleil selon la revendication 5, **caractérisé en ce que** le premier panneau (20) de réduction d'éblouissement comprend une poignée (36) qui s'étend à l'extérieur de l'élément (12) de masque lorsque ledit premier panneau (20) de réduction d'éblouissement est dans ladite position rétractée.

7. Pare-soleil selon la revendication 5, **caractérisé en ce que** l'élément (12) de masque comprend une ouverture et le premier panneau (20) de réduction d'éblouissement est rétractable dans l'élément (12) de masque à travers ladite ouverture.

8. Pare-soleil selon la revendication 7, **caractérisé en ce que** l'élément (12) de masque est en contact élastique avec le premier panneau (20) de réduction d'éblouissement dans ladite ouverture.

9. Pare-soleil selon la revendication 8, **caractérisé en ce que** l'élément (12) de masque ferme de façon élastique ladite ouverture pour retenir le premier panneau (20) de réduction d'éblouissement dans ladite position rétractée.

10. Masque de réduction d'éblouissement destiné à être déployé en combinaison avec un élément (12) de masque opaque d'un pare-soleil, ledit élément (12) de masque opaque obscurcissant une première région visuelle correspondant à une partie supérieure d'un pare-brise, le masque de réduction d'éblouissement comprenant :
a) un premier panneau (20) sensiblement transparent ayant une longueur et comprenant des moyens pour être monté de façon extensible à partir de l'élément (12) de masque pour créer une seconde région visuelle en dessous de la première région visuelle, ladite seconde région visuelle ayant une première réduction d'éblouissement par rapport au pare-brise,
b) un second panneau (38) sensiblement transparent, déplaçable par rapport au premier panneau,
**caractérisé en ce que** le second panneau (38) est déplaçable de façon réglable sensiblement le long et sur ladite longueur dudit premier panneau (20) de sorte que le premier et le second panneaux (20, 38) coopèrent pour former une sous-région visuelle de la seconde région visuelle, ladite sous-région ayant une réduction d'éblouissement augmentée par rapport à la première région d'éblouissement.

11. Masque de réduction d'éblouissement, selon la revendication 10, **caractérisé en ce que** le second panneau (38) de réduction d'éblouissement est dimensionné de façon telle que ladite sous-région s'étend sensiblement le long d'une hauteur complète de ladite seconde région visuelle.

12. Masque de réduction d'éblouissement selon la revendication 10, **caractérisé en ce que** le premier panneau (20) de réduction d'éblouissement est déplaçable vers une position rétractée sensiblement parallèle et adjacente audit élément (12) de masque.

13. Masque de réduction d'éblouissement selon la revendication 12, **caractérisé en ce que** le premier panneau (20) de réduction d'éblouissement est, dans ladite position rétractée, positionné à l'intérieur dudit élément (12) de masque.

14. Masque de réduction d'éblouissement selon la revendication 13, **caractérisé en ce que** le premier panneau de réduction d'éblouissement est coulissable à partir de ladite position rétractée vers ladite position étendue.

15. Masque de réduction d'éblouissement selon la revendication 14, **caractérisé en ce que** le premier panneau (20) de réduction d'éblouissement comporte une poignée (36) qui s'étend à l'extérieur de l'élément (12) de masque lorsque ledit premier panneau (20) de réduction d'éblouissement est dans ladite position rétractée.
